# EUROPÄISCHE PATENTSCHRIFT

(11) **EP 1 626 997 B1**
(45) Veröffentlichungstag und Bekanntmachung des Hinweises auf die Patenterteilung: **19.05.2010**
(21) Anmeldenummer: 04732983.4
(22) Anmeldetag: 14.05.2004
(51) Int. Cl.: C08F 8/06, C08F 10/10, C08F 2/38, C10M 143/18, C10L 1/195, C10L 1/198

(54) **VERFAHREN ZUR HERSTELLUNG VON CARBOXYL-TERMINIERTEN POLYISOBUTENEN**
METHOD FOR PRODUCING CARBOXYL-TERMINATED POLYISOBUTENES
PROCEDE DE PRODUCTION DE POLYISOBUTENES TERMINES PAR UN GROUPE CARBOXYLE

(30) Priorität: 16.05.2003 DE 10322164
(43) Veröffentlichungstag der Anmeldung: 22.02.2006
(73) Patentinhaber: BASF SE, 67056 Ludwigshafen (DE)
(72) Erfinder: LANGE, Arno, 67098 Bad Dürkheim (DE); MACH, Helmut, 69115 Heidelberg (DE); RATH, Hans, Peter, 67269 Grünstadt (DE); KARL, Ulrich, 67061 Ludwigshafen (DE); IVAN, Bela, H-1038 Budapest (HU); GROH, Péter, Werner, H-1144 Budapest (HU); NAGY, Zsuzsanna, Tamara, H-1118 Budapest (HU); PALFI, Viktória, H-1076 Budapest (HU)
(86) Internationale Anmeldenummer: PCT/EP2004/005202
(87) Internationale Veröffentlichungsnummer: WO 2004/101631

(56) Entgegenhaltungen:
- EP-A- 0 384 086
- WO-A-01/55229
- US-A- 4 076 738

## Beschreibung

Die vorliegende Erfindung betrifft ein Verfahren zur Herstellung von Carboxyl-terminierten Polyisobutenen.

Verfahren zur Herstellung von Carboxyl-terminierten Polyisobutenen sind bekannt. So beschreiben Y. Kwon et al. in Macromolecules 2002, 35, 3348-3357 die Umsetzung von "lebende" Polyisobuten-Ketten mit 1,1-Diphenylethylen und anschließendes Quenchen mit 1-Methoxy-1-trimethylsiloxypropen zu einem mit einer Methoxycarbonyl-Gruppe terminierten Polyisobuten, das zum Carboxyl-terminierten Polyisobuten hydrolysiert wird. Nachteilig bei diesem Verfahren ist die Verwendung des in der Herstellung aufwändigen und kommerziell nicht erhältlichen 1-Methoxy-1-trimethylsiloxypropens.

Die EP 0 123 424 beschreibt die Umsetzung von Polyolefinen mit einem Hydroperoxid und einem Peroxid zu einem Gemisch aus Carbonyl- und Carboxyl-terminierten Polyolefinen. Nachteilig hierbei ist zum einen die Verwendung von explosiven Peroxiden. Zudem ist die Ausbeute an erhaltenen Carboxyl-terminierten Polyolefinen nicht befriedigend.

Die US 4,076,738 beschreibt ein Verfahren zur Herstellung von Polyisobuten-Carbonsäuren, bei dem man ein Polyisobuten mit Ozon umsetzt und das Ozonolyseprodukt mit Salpetersäure oxidiert.

WO 01/55229 betrifft ein Verfahren zur Herstellung aminierter Polyolefine, bei dem man ein Polyolefin mit wenigstens einer ungesättigten Endgruppe in Gegenwart eines Alkanol/Kohlenwasserstoff-Gemischs einer Ozonolyse unterwirft und das erhaltene Polyolefin-Alkoxy-Hydroperoxid einer katalytischen Reduktion mit Wasserstoff zu einem Gemisch aus Hemiacetalen und Hemiketalen unterwirft.

EP-A-0384086 betrifft ein Verfahren zur Herstellung langkettiger Amine, bei dem man ein Polyolefin ozonisiert, das Ozonolyseprodukt mit einem primären Amin zu einem Imin umsetzt und das Imin zum Amin hydriert.

S. Nemes et al. beschreiben in Polymer Bulletin 24, 187-194 (1990) die Umsetzung von Polyisobuten, das mit einer Gruppe -C(CH₃)₂Cl terminiert ist, mit Kalium-tert-butanolat und n-Butyllithium zum entsprechenden Polyisobuten-Anion und anschließende Umsetzung des Anions mit Kohlendioxid zum Carboxyl-terminierten Polyisobuten. Nachteilig hierbei ist die Verwendung von teuren und hydrolyseempfindlichen Reagenzien, was für eine Anwendung in größerem Maßstab ungeeignet ist.

Die US 3,427,351 beschreibt die Umsetzung eines Copolymers, das durch Copolymerisation von Isobuten mit einem konjugierten Dien erhalten wird, mit Ozon und anschließende Umsetzung der Ozonolyseprodukte mit einem starken Oxidationsmittel oder in einer Haloformreaktion zu Carboxyl-terminierten Polyisobutenen. Hierbei ist von Nachteil, dass das eingesetzte Copolymer fragmentiert wird, um Carboxyl-terminierte Polyisobutene zu erhalten. Einheitliche Polymere mit einer engen Molekulargewichtsverteilung sind mit diesem Verfahren nicht erhältlich.

R.F. Storey et al. beschreiben in Polym. Prepr. 1997, 38 (2), 283 die Umsetzung von Polyisobuten, das mit einer Gruppe -C(CH₃)₂Cl terminiert ist, mit Kalium-tert-butanolat zum entsprechenden Eliminierungsprodukt mit einem ethylenisch ungesättigten Terminus und dessen Umsetzung mit Ozon zum Methylketon-terminierten Polyisobuten. Dieses wird anschließend in einer Haloformreaktion zum Carboxyl-terminierten Polyisobuten umgesetzt.

Nachteilig bei den drei zuletzt genannten Verfahren ist außerdem, dass sich die Polyisobutene nur in mehreren, aufwändigen Schritten zu den entsprechenden Carboxyl-terminierten Produkten umsetzen lassen.

Aufgabe der vorliegenden Erfindung war es daher, ein vereinfachtes Verfahren zur Herstellung von Carboxyl-terminierten Polyisobutenen bereitzustellen.

Die Aufgabe wird gelöst durch ein Verfahren zur Herstellung von Carboxyl-terminierten Polyisobutenen, bei dem man ein mit einer ethylenisch ungesättigten Doppelbindung terminiertes Polyisobuten der Formel

A(̵M-B)ₙ (I)

worin
- A: für einen von einem Polymerisationsinitiator abgeleiteten Rest steht,
- M: für eine Polymerkette steht, die Wiederholungseinheiten der Formel II

⁅CH₂-C(CH₃)₂⁆ (II)

enthält,
- B: für einen Rest der Formeln III oder IV steht

-CH₂-CH=CH₂ (III)

-CH=CR¹R² (IV)

worin
R¹ und R² für H, C₁-C₄-Alkyl oder Phenyl stehen, und
- n: für eine Zahl von 1 bis 6 steht,
mit Ozon umsetzt und
(a) für den Fall, dass B für einen Rest der Formel IV steht, worin R¹ und R² für Phenyl stehen, gegebenenfalls das erhaltene Reaktionsgemisch anschließend auf eine Temperatur von 60 bis 150 °C erwärmt; und
(b) in den übrigen Fällen das erhaltene Reaktionsprodukt anschließend auf eine Temperatur von 60 bis 150 °C erwärmt.

Unter einem Carboxyl-terminierten Polyisobuten versteht man im Rahmen der vorliegenden Erfindung ein Polyisobuten, welches an einem oder mehreren Kettenenden der Polyisobutengruppe eine Carboxylgruppe gebunden enthält. Als Kettenende wird im Rahmen der vorliegenden Erfindung das äußerste Kohlenstoffatom des Polymergerüstes an jedem Ende der Polymerkette verstanden. Unter einer Carboxylgruppe wird eine Gruppe -COOH oder -COO⁻M^{m+}_{1/m} verstanden. M^{m+}_{1/m} steht dabei für ein Kationenäquivalent. Bevorzugte Kationenäquivalente leiten sich von Alkali- und Erdalkalimetallkationen, wie Lithium, Natrium, Kalium, Magnesium oder Calcium, sowie von Ammoniumkationen [NR^{a}R^{b}R^{c}R^{d}]⁺ ,worin R^{a}, R^{b}, R^{c} und R^{d} unabhängig voneinander für H, C₁-C₆-Alkyl, Aryl, oder Aralkyl stehen, ab.

In Formel IV stehen R¹ und R² vorzugsweise für den gleichen Rest. Besonders bevorzugt stehen sowohl R¹ als auch R² für Phenyl. Alternativ stehen sowohl R¹ als auch R² besonders bevorzugt für Methyl.

Wesentliches Merkmal der Gruppe B ist, dass das β-Kohlenstoffatom der Doppelbindung, d. h. jenes Kohlenstoffatom, welches weiter im Inneren der Polymerkette liegt, ein Wasserstoffatom trägt.

A steht für einen von einem Polymerisationsinitiator abgeleiteten Rest. Die Struktur dieses Restes hängt im Wesentlichen von der Art der Polymerisation, mittels derer das Polyisobuten-Edukt hergestellt wird, ab. Wird die kationische Polymerisation z. B. hydrolytisch beendet, so kann A beispielsweise für einen tert-Butylrest stehen. Wird das Polyisobuten beispielsweise unter den Bedingungen einer lebenden kationischen Polymerisation in Gegenwart eines Initiatormoleküls ("Inifer") hergestellt, so kann A auch für ein von dem Initiatormolekül abgeleiteten Rest stehen. Beispiele für solche Initiatormoleküle und daraus abgeleitete Reste sind beispielsweise in der WO 02/48215, EP 0 713 883 oder EP 0 279 456 beschrieben.

n steht beispielsweise für eine Zahl >1, wenn das Polyisobuten-Edukt unter den Bedingungen einer lebenden kationischen Polymerisation in Gegenwart eines Initiatormoleküls, das wenigstens bifunktionell ist, das heißt von welchem wenigstens zwei Polymerketten ausgehen können, hergestellt wird. Vorzugsweise steht n für eine Zahl von 1 bis 3, besonders bevorzugt für 1 oder 2 und speziell für 1.

Im Rahmen der vorliegenden Erfindung steht C₁-C₄-Alkyl für Methyl, Ethyl, Propyl, Isopropyl, n-Butyl, sec-Butyl, Isobutyl oder tert-Butyl und vorzugsweise für Methyl. C₁-C₆-Alkyl steht darüber hinaus für Pentyl, Hexyl und deren Stellungsisomere.

Aryl steht vorzugsweise für gegebenenfalls substituiertes Phenyl oder Naphthyl. Geeignete Substituenten sind OC₁-C₄-Alkyl und Halogen. Besonders bevorzugt steht Aryl für Phenyl, insbesondere für unsubstituiertes Phenyl.

Aralkyl steht vorzugsweise für Benzyl oder 1- oder 2-Phenylethyl.

Halogen steht vorzugsweise für Fluor, Chlor oder Brom.

Mit ethylenisch ungesättigten Doppelbindungen terminierte Polyisobutene der Formel I sind dem Fachmann bekannt. So sind Polyisobutene I, worin B für einen Rest IV steht, worin R¹ und R² für Methyl stehen, beispielsweise dadurch erhältlich, dass man die Polymerisationsreaktion hydrolytisch abbricht und gegebenenfalls das Hydrolyseprodukt einer anschließenden Eliminierung unter geeigneten Bedingungen unterwirft. Solche Polyisobutene und Verfahren zu ihrer Herstellung sind beispielsweise in J. P. Kennedy, B. Iván, "Designed Polymers by Carbocationic Macromolecular Engineering", Oxford University Press, New York 1991 beschrieben.

Polyisobutene der Formel I, worin B für einen Rest IV steht, in welchem, R¹ und R² für Phenyl stehen, sind beispielsweise dadurch erhältlich, dass man in einer lebenden kationischen Polymerisation von Isobuten das lebende Polymer mit 1,1-Diphenylethylen und einer Base umsetzt, wobei man ein Diphenylvinyl-verkapptes Polyisobuten erhält. Solche Diphenylvinyl-verkappte Polyisobutene und Verfahren zu ihrer Herstellung sind beispielsweise von J. Feldthusen, B. Iván, A. H. E. Müller und J. Kops in Macromol. Rep. 1995, A32, 639, J. Feldthusen, B. Iván und A. H. E. Müller in Macromolecules 1997, 30, 6989 und in Macromolecules 1998, 31, 578, in der DE-A 19648028 und in der DE-A 19610350 beschrieben.

Polyisobutene, der Formel I, worin B für einen Rest III steht, sind beispielsweise dadurch erhältlich, dass man in einer lebenden kationischen Polymerisation von Isobuten das lebende Polymer mit Allyltrimethylsilan umsetzt, wobei man ein Allylverkapptes Polymer erhält. Allyl-verkappte Polyisobutene und Verfahren zu ihrer Herstellung sind beispielsweise von B. Iván und J. P. Kennedy in J. Polym. Sci. Part A: Chem. Ed. 1990, 28, 89 beschrieben.

Andere olefinisch terminierte Polyisobutene I sind durch analoge Vorgehensweisen erhältlich.

Die Polyisobutene der Formel I besitzen vorzugsweise ein zahlenmittleres Molekulargewicht Mₙ von 100 bis 500000, besonders bevorzugt von 100 bis 50000, stärker bevorzugt von 500 bis 20000, insbesondere von 900 bis 12000 und speziell von 900 bis 3000.

Unter dem Begriff "Polyisobuten" fallen im Rahmen der vorliegenden Erfindung auch oligomere Isobutene, wie dimeres, trimeres oder tetrameres Isobuten, welche mit einer ethylenisch ungesättigten Doppelbindung terminiert sind.

Unter Polyisobuten werden im Rahmen der vorliegenden Erfindungen auch alle durch kationische Polymerisation erhältlichen Polymerisate verstanden, die vorzugsweise wenigstens 60 Gew.-% Isobuten, besonders bevorzugt wenigstens 80 Gew.-%, stärker bevorzugt wenigstens 90 Gew.-% und insbesondere wenigstens 95 Gew.-% Isobuten einpolymerisiert enthalten. Daneben können die Polyisobutene weitere Butenisomere, wie 1- oder 2-Buten sowie davon verschiedene olefinisch ungesättigte Monomere, die mit Isobuten unter kationischen Polymerisationsbedingungen copolymerisierbar sind, einpolymerisiert enthalten.

Als Isobuten-Einsatzstoffe für die Herstellung von Polyisobutenen, die als Edukte für das erfindungsgemäße Verfahren geeignet sind, eignen sich dementsprechend sowohl Isobuten selbst als auch isobutenhaltige C₄-Kohlenwasserstoffströme, beispielsweise C₄-Raffinate, C₄-Schnitte aus der Isobuten-Dehydrierung, C₄-Schnitte aus Steamcrackern, FCC-Crackem (FCC: Fluid Catalyzed Cracking), sofern sie weitgehend von darin enthaltenem 1,3-Butadien befreit sind. Besonders geeignete C₄-Kohlenwasserstoffströme enthalten in der Regel weniger als 500 ppm, vorzugsweise weniger als 200 ppm Butadien. Bei Einsatz von C₄-Schnitten als Einsatzmaterial übernehmen die von Isobuten verschiedenen Kohlenwasserstoffe die Rolle eines inerten Lösungsmittels.

Als copolymerisierbare Monomere kommen Vinylaromaten wie Styrol und α-Methylstyrol, C₁-C₄-Alkylstyrole wie 2-, 3- und 4-Methylstyrol, sowie 4-tert-Butylstyrol, Isoolefine mit 5 bis 10 C-Atomen wie 2-Methylbuten-1, 2-Methylpenten-1, 2-Methylhexen-1, 2-Ethylpenten-1, 2-Ethylhexen-1 und 2-Propylhepten-1 in Betracht. Als Comonomere kommen weiterhin Olefine in Betracht, die eine Silylgruppe aufweisen wie 1-Trimethoxysilylethen, 1-(Trimethoxysilyl)propen, 1-(Trimethoxysilyl)-2-methylpropen-2, 1-[Tri(methoxyethoxy)si-lyl]ethen, 1-[Tri(methoxyethoxy)silyl]propen, und 1-[Tri(meth-oxyethoxy)silyl]-2-methylpropen-2.

Je nach Polymerisationsverfahren beträgt der Polydispersitätsindex PDI (= M_{w}/Mₙ) der erhaltenen Polyisobutene etwa 1,01 bis 10. Polymere aus der lebenden kationischen Polymerisation weisen in der Regel einen PDI von etwa 1,01 bis 2,0 auf. In das erfindungsgemäße Verfahren werden vorzugsweise Polyisobutene mit einem PDI von 1,01 bis 1,5 eingesetzt.

Die Umsetzung des Polyisobutens der Formel I mit Ozon erfolgt im Wesentlichen nach üblichen Verfahren des Standes der Technik, wie sie beispielsweise im "Organikum", 15. Auflage, VEB Deutscher Verlag der Wissenschaften, S. 330 ff oder in J. March, Advanced Organic Chemistry, Wiley, New York, 3. Auflage, S. 1066-1070 und in der jeweils darin zitierten Literatur beschrieben sind. Die Ozonolyse wird in der Regel in einem geeigneten Lösungsmittel durchgeführt. Geeignete Lösungsmittel sind beispielsweise Alkane, wie Pentan, Hexan, Heptan, Octan, Nonan, Decan oder Petrolether, Cycloalkane, wie Cyclohexan oder Cyclooctan, Halogenalkane, wie Methylchlorid, Methylenchlorid, Chloroform, Tetrachlorkohlenstoff, Dichlorethan, Trichlorethan oder Tetrachlorethan, und Carbonsäurederivate, wie Essigsäureethylester, Essigsäurepropylester oder Dimethylformamid. Darüber hinaus sind auch protische Lösungsmittel, wie Wasser, C₁-C₄-Alkohole, wie Methanol, Ethanol, Propanol, Isopropanol oder die Butanole, sowie Carbonsäuren, wie Essigsäure oder Propionsäure, geeignet. Geeignet sind auch Gemische der vorstehen genannten Lösungsmittel. Vorzugsweise verwendet man als Lösungsmittel wenigstens ein Alkan, insbesondere Hexan, und/oder wenigstens ein Halogenalkan, insbesondere Methylenchlorid, Chloroform oder Tetrachlorkohlenstoff.

Die Ozonolyse erfolgt vorzugsweise bei einer Temperatur von -100 bis +40 °C, besonders bevorzugt von -78 bis +30 °C, insbesondere von -25 °C bis 25 °C und speziell von 0 °C bis 20 °C.

Das in das erfindungsgemäße Verfahren eingesetzte Ozon wird gewöhnlich durch üblichen Verfahren, beispielsweise mittels eines Ozongenerators (Ozonisator), erzeugt, in welchen Luft oder Sauerstoff eingeleitet wird. Der aus dem Ozonisator austretende Strom enthält in der Regel etwa 3 bis 4 Vol-%, speziell 3,4 bis 3,8 Vol.%, Ozon.

Die Umsetzung des Polyisobutens I mit Ozon erfolgt beispielsweise so, dass man das Polyisobuten I in einem geeigneten Lösungsmittel vorlegt, diese Lösung auf die gewünschte Reaktionstemperatur einstellt und anschließend Ozon bzw. ein Ozonhaltiges Gasgemisch, wie es beispielsweise mit dem Ozonisator erzeugt wird, einleitet.

Die Geschwindigkeit der Ozon-Einleitung hängt unter anderem von der Ansatzgröße und von der Ozon-Konzentration im eingeleiteten Gasstrom ab und wird im Einzelfall eingestellt. Sie wird vorzugsweise so gewählt, dass die bei der exothermen Umsetzung von Ozon mit Polyisobuten gebildete Reaktionswärme gut abgeleitet werden kann.

Die Dauer der Ozon-Einleitung hängt unter anderem von der Ansatzgröße, von der Ozon-Konzentration im eingeleiteten Gasstrom und von der Einleitungsgeschwindigkeit ab und wird im Einzelfall bestimmt. Vorzugsweise wird jedoch wenigstens solange Ozon eingeleitet, bis das Reaktionsgemisch eine bläuliche Färbung, die auf die Anwesenheit von nicht umgesetztem Ozon zurückzuführen ist, annimmt.

Nach beendeter Ozon-Einleitung lässt man das Reaktionsgemisch vorzugsweise noch nachreagieren, wobei auch hier die Reaktionszeit von der Ansatzgröße abhängt und im Einzelfall bestimmt werde muss. Die Temperatur dieser Nachreaktion beträgt vorzugsweise -78 bis 40 °C, insbesondere -25 bis 25 °C.

Anschließend wird noch vorhandenes Ozon gegebenenfalls aus dem Reaktionsgemisch entfernt, beispielsweise, indem man einen Sauerstoff-, Luft- oder Inertgasstrom hindurchleitet.

Nach erfolgter Entfernung des Ozons, was beispielsweise an der Entfärbung der Lösung zu erkennen ist, wird das Reaktionsgemisch in der Regel nach üblichen Verfahren aufgearbeitet und gegebenenfalls einer thermischen Nachbehandlung durch Erwärmen auf eine Temperatur von 60 bis 150 °C, vorzugsweise von 70 bis 120 °C und insbesondere von 70 bis 100 °C, unterworfen. Es ist auch möglich, das Reaktionsgemisch ohne vorherige Aufarbeitung der thermischen Behandlung zu unterwerfen.

Die thermische Nachbehandlung erfolgt insbesondere dann, wenn als Edukt ein Polyisobuten der Formel I verwendet wird, worin B für einen Rest der Formel III oder IV steht, worin R¹ and R² nicht für Phenyl stehen. Wird hingegen als Edukt ein Polyisobuten der Formel verwendete, worin B für einen Rest der Formel IV steht, so ist, wenn im Rest IV R¹ und R² für Phenyl stehen, meist keine thermische Nachbehandlung erforderlich und man erhält in der Regel direkt das Carboxyl-terminierte Polymer.

Die Aufarbeitung des Reaktionsgemischs aus der Ozonolyse erfolgt in der Regel nach üblichen Verfahren, beispielsweise durch wenigstens teilweise Entfernen des bei der Ozonolyse verwendeten Lösungsmittels, gegebenenfalls Aufnahme des teilweise oder vollständig eingeengten Produkts in einem geeigneten Lösungsmittel, beispielsweise in einem Alkan, wie Pentan, Hexan oder Heptan, und Präzipitieren des Produkts durch Vermischen der Lösung mit einem Lösungsmittel, in welchem das Ozonolyseprodukt nicht löslich ist, beispielsweise mit einem Alkanol, wie Methanol oder Ethanol. Wenn die Ozonolyse bereits in einem Alkan oder einem anderen Lösungsmittel, in welchem das Ozonolyseprodukt löslich ist, erfolgte, so kann die Präzipitation des Ozonolyseprodukts selbstverständlich auch direkt aus dem Reaktionsgemisch erfolgen. Die Aufarbeitung kann auch chromatographisch oder extraktiv erfolgen.

Erfolgt die thermische Nachbehandlung nach Aufarbeitung des Reaktionsgemischs aus der Ozonolyse, so wird das isolierte Produkt in der Regel in einem geeigneten Lösungsmittel aufgenommen und auf eine Temperatur von 60 bis 150 °C, vorzugsweise von 70 bis 120 °C, insbesondere von 70 bis 100 °C, erwärmt. Geeignete Lösungsmittel sind solche mit einem höheren Siedepunkt, z.B. aromatische Kohlenwasserstoffe, wie Toluol, die Xylole, Chlorbenzol und Nitrobenzol, DMSO, höhere Alkane, z.B. C₇-C₂₀-Alkane, wie Octadecan, Mineralölfraktionen und Gemische davon. Vorzugsweise verwendet man aromatische Kohlenwasserstoffe.

Die Dauer der thermischen Nachbehandlung ist unter anderem von Ansatzgröße und Umsetzungsgeschwindigkeit abhängig und wird im Einzelfall bestimmt.

Erfolgt die thermische Nachbehandlung ohne vorherige Aufarbeitung des Reaktionsgemischs aus der Ozonolyse, so wird das Reaktionsgemisch geeigneterweise wenigstens teilweise vom Lösungsmittel befreit, was beispielsweise destillativ, gegebenenfalls unter verringertem Druck, erfolgt. Der Rückstand wird anschließend in wenigstens einem der vorstehend aufgeführten höher siedenden Lösungsmittel aufgenommen und auf die vorstehend genannte Temperatur erwärmt. Diese Vorgehensweise ist insbesondere dann von Vorteil, wenn das bei der Ozonolyse verwendete Lösungsmittel einen Siedepunkt besitzt, der unterhalb der Temperatur liegt, bei der die thermische Nachbehandlung erfolgen soll. Es ist jedoch auch möglich, das gesamte Reaktionsgemisch in das höher siedende Lösungsmittel zu überführen, ohne das Lösungsmittel aus der Ozonolyse zu entfernen. Besitzt das bei der Ozonolyse verwendete Lösungsmittel jedoch einen für die thermische Nachbehandlung ausreichend hohen Siedepunkt, so braucht es in der Regel nicht durch die zuvor genannten Lösungsmittel ersetzt zu werden und die thermische Behandlung erfolgt in diesem Lösungsmittel.

Die Aufarbeitung des Reaktionsgemischs nach der thermischen Behandlung erfolgt meist nach üblichen Verfahren, beispielsweise durch wenigstens teilweise Entfernen des bei der thermischen Behandlung verwendeten Lösungsmittels, gegebenenfalls Aufnahme des teilweise oder vollständig eingeengten Produkts in einem geeigneten Lösungsmittel, beispielsweise in einem Alkan, wie Pentan, Hexan oder Heptan, und Präzipitieren des Produkts durch Vermischen der Lösung mit einem Lösungsmittel, in welchem das Carboxyl-terminierte Polyisobuten nicht löslich ist, beispielsweise mit einem Alkanol, wie Methanol oder Ethanol. Die Aufarbeitung kann auch chromatographisch oder extraktiv erfolgen.

Die mit dem erfindungsgemäßen Verfahren erhältlichen Carboxyl-terminierten Polyisobutene können nach üblichen Verfahren des Standes der Technik beliebig derivatisiert werden. So können die Carboxylgruppen beispielsweise zu Carbonsäuresalzen, Estergruppen, Amidgruppen, Imidgruppen, Amidinen, Anhydriden oder Carbonsäurehalogeniden umgesetzt werden.

Das erfindungsgemäße Verfahren erlaubt die einfache Herstellung von Carboxyl-terminierten Polyisobutenen durch Ozonolyse von mit ethylenisch ungesättigten Doppelbindungen terminierten Polyisobutenen in nahezu quantitativen Ausbeuten und ohne komplexe Oxidationsschritte nach der Ozonolyse.

Die nachfolgenden Beispiele sollen die Erfindung veranschaulichen, ohne sie jedoch einzuschränken.

### Beispiele

### 1. Herstellung von Polyisobutenen der Formel I

### 1.1 Herstellung eines Allyl-terminierten Polyisobutens (B = Rest der Formel III) durch lebende kationische Polymerisation

Man legte 1,49 g (0,01mol) 2-Chlor-2,4,4-trimethylpentan (TMPCI), 1,16 g (0,01 mol) N, N, N',N'-Tetramethylethylendiamin (TMEDA) und 30,35 g (0,16 mol) Titantetrachlorid in einem Gemisch aus 600 ml n-Hexan und 400 ml Dichlormethan bei -78 °C unter einer Inertgasatmosphäre vor und leitete dann unter Rühren 13,47 g (0,24 mol) Isobuten in dieses Reaktionsgemisch ein. Nach 3 bis 5 Minuten Rühren bei dieser Temperatur versetzte man das Reaktionsgemisch mit 3,43 g (0,03 mol) Allyltrimethylsilan und ließ die Mischung weitere 30 Minuten bei dieser Temperatur rühren. Zur Aufarbeitung quenchte man das Reaktionsgemisch mit 100 ml Methanol, trennte von den dabei entstandenen zwei Phasen die obere Phase ab und engte diese auf eine Konzentration von 40 bis 50 % ein. Dann fügte man diese konzentrierte Polymerlösung dem zehnfachen Volumen an Methanol tropfenweise hinzu, wobei das entstandene Polymer präzipitierte. Nach dem Abdekantieren des Methanols wurde das Präzipitat in 200 ml n-Hexan aufgenommen. Die Lösung wurde drei Mal mit Wasser gewaschen, über Magnesiumsulfat getrocknet, filtriert und vom Lösungsmittel befreit. Nach dem Trocknen des Präzipitats in einem Vakuumtrockenschrank erhielt man als Produkt das Allyl-terminierte Polyisobuten in Form eines farblosen, hochviskosen Öls mit einem zahlenmittleren Molekulargewicht Mₙ von 1300 und einem PDI von 1,04. Das Molekulargewicht wurde mittels GPC (Gelpermeationschromatographie) bestimmt.
¹H-NMR (CDCl_{3;} 400 MHz): 5,84 (m, 1H, -CH=), 5,00 (t, 2H, =CH₂). 2,02 (d, 2H, -CH₂-CH=CH₂), 1,0-1,6 (m, CH₃-Gruppen der Polymerkette); 0,99 (-C(CH₃)₃).

### 1.2 Herstellung eines Diphenyvinyl-terminierten Polyisobutens der Formel I (B = Rest der Formel IV; R¹, R² = Phenyl) durch lebende kationische Polymerisation

Man legte 1,49 g (0,01 mol) TMPCI, 1,16 g (0,01 mol) TMEDA und 30,35 g (0,16 mol) TiCl₄ in einem Gemisch aus 600 ml n-Hexan und 400 ml Methylenchlorid bei -78 °C in einer Stickstoffatmosphäre vor und leitete dann 13,47g (0,24 mol) Isobuten bei dieser Temperatur unter Rühren ein. Nach 5 Minuten Rühren bei dieser Temperatur fügte man 3,60 g (0,02 mol) 1,1-Diphenylethylen hinzu, wobei sich das Reaktionsgemisch von gelb nach rot verfärbte. Nach weiteren 45 Minuten Rühren wurde das Reaktionsgemisch mit überschüssigem Methanol gequencht, wobei sich die Mischung entfärbte. Von den dabei entstandenen zwei Phasen wurde die obere abgetrennt und die Lösungsmittel daraus entfernt. Der Rückstand wurde in Chloroform aufgenommen und etwa 12 Stunden bei Raumtemperatur in Gegenwart von katalytischen Mengen HCl gerührt. Nach dem Verdampfen des Lösungsmittels unter verringertem Druck wurde der Rückstand in n-Hexan gelöst und in Methanol präzipitiert. Das Methanol wurde abdekantiert und der Rückstand wurde in n-Hexan aufgenommen. Die Lösung wurde 24 Stunden über Magnesiumsulfat getrocknet, filtriert und vom Lösungsmittel unter verringertem Druck befreit. Nach dem Trocknen des Präzipitats in einem Vakuumtrockenschrank erhielt man als Produkt 2,2-Diphenylvinyl-terminiertes Polyisobuten in Form eines Öls mit einem zahlenmittleren Molekulargewicht Mₙ von 1700 und einem PDI von 1,02.
¹H-NMR (CDCl₃; 400 MHz): 7,1-7,4 (m, 10H, Phenyl); 6,13 (s, 1H, CH=C(Ph)₂); 1,0-1,6 (m, CH₃-Gruppen der Polymerkette); 0,99 (s, 9H, -C(CH₃)₃.

### 2. Ozonolyse

### 2.1 Ozonolyse des Produkts aus Beispiel 1.1

Die Erzeugung von Ozon erfolgte durch Einleiten von Sauerstoff (etwa 5 I/h) in einen Mikro-Ozonisator von Fischer Scientific Co. Der Ozonisator erzeugte etwa 0,15 mmol Ozon/min bei einer Sauerstoffzufuhr von etwa 100 ml/min.

Man legte 1 g des Polyisobutens aus Beispiel 1.1 in 10 ml eines Lösungsmittelgemisch aus n-Hexan und Methylenchlorid (Volumenverhältnis 2:8) bei 25 °C vor und leitete in das Reaktionsgemisch für 4 Stunden Ozon mit einer Durchflussgeschwindigkeit von 5 I/h ein. Nach Beendigung der Ozon-Einleitung wurden die Lösungsmittel verdampft und der Rückstand wurde in 5 ml n-Hexan gelöst. Anschließend wurde die Lösung zu dem zehnfachen Volumen Methanol gegeben, woraufhin das Ozonolyseprodukt präzipitierte. Nach dem Abdekantieren des Methanols wurde das Präzipitat in einem Vakuumtrockenschrank getrocknet. Man erhielt ein Produktgemisch, das neben dem Carboxyl-terminierten Polyisobuten auch Carbonyl-terminierte Polymere und Ozonide enthielt.
¹H-NMR (CDCl₃; 400 MHz): 5,20 (s, 2H, CH₂-CH=CH₂•O₃*); 5,18 (m, 1H, CH₂-CH=CH₂•O₃*); 4,99 (s, 2H, CH₂-CH=CH₂•O₃*); 2,35 (s, 2H, -CH₂-CHO); 2,34 (m, 2H,-CH₂-COOH); 1,0-1,6 (m, CH₃-Gruppen der Polymerkette); 0,99 (s, 9H, -C(CH₃)₃).
IR [cm⁻¹] (Film auf KBr): 2500-3500 (OH); 1712 (CO); 1707 (CO); 1105; 1060
(CH=CH₂•O₃*)

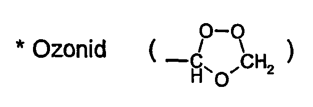

### Thermische Nachbehandlung:

0,4 g des Produktgemischs aus der Ozonolyse wurden in 20 ml Toluol gelöst und unter Inertgas auf eine Temperatur von 80 °C 6 Stunden erwärmt. Anschließend wurde Toluol verdampft, bis man eine 40-50%ige Lösung erhielt, die man tropfenweise zum zehnfachen Volumen an Methanol hinzufügte, wobei das Produkt präzipitierte. Nach dem Abdekantieren des Methanols wurde das Präzipitat in einem Vakuumtrockenschrank bei Raumtemperatur getrocknet und man erhielt als Produkt das Carboxyl-terminierte Polyisobuten in quantitativer Ausbeute.
¹H-NMR (CDCl₃; 400 MHz): 2,34 (s, 2H, -CH₂COOH), 1,0-1,6 (m, CH₃-Gruppen der Polymerkette); 0,99 (s, 9H, -C(CH₃)₃).
IR [cm⁻¹] (Film auf KBr): 2500-3500 (OH); 1707 (CO).

### 2.2 Ozonolyse des Produkts aus Beispiel 1.2

Die Erzeugung von Ozon erfolgte im oben genannten Ozonisator.

Man legte 1 g des Polyisobutens aus Beispiel 1.2 in 10 ml Methylenchlorid bei Raumtemperatur vor und leitete in das Reaktionsgemisch 4 Stunden Ozon mit einer Durchflussgeschwindigkeit von 5 I/h ein. Nach beendeter Ozon-Einleitung leitete man 5 Minuten einen Stickstoffstrom durch die Reaktionslösung hindurch, um überschüssiges Ozon zu entfernen. Anschließend verdampfte man das Lösungsmittel, löste den Rückstand in n-Hexan auf und präzipitierte das Produkt durch Einleiten der Lösung in Methanol. Nach dem Abdekantiem des Methanols wurde das Präzipitat in einem Vakuumtrockenschrank getrocknet und man erhielt als Produkt das Carboxyl-terminierte Polyisobuten in quantitativer Ausbeute.
¹H-NMR (CDCl₃; 400 MHz): 1,72 (s, 2H, -CH₂-C(CH₃)₂-COOH), 1,0-1,6 (m, CH₃-Gruppen der Polymerkette); 0,99 (s, 9H, -C(CH₃)₃).
IR [cm⁻¹] (Film auf KBr): 2500-3500 (OH); 1700 (CO).

## Patentansprüche

1. Verfahren zur Herstellung von Carboxyl-terminierten Polyisobutenen, bei dem man ein mit einer ethylenisch ungesättigten Doppelbindung terminiertes Polyisobuten der Formel I
A(̵M-B)ₙ (I)
worin
A für einen von einem Polymerisationsinitiator abgeleiteten Rest steht,
M für eine Polymerkette steht, die Wiederholungseinheiten der Formel II
⁅CH₂-C(CH₃)₂⁆ (II)
enthält,
B für einen Rest der Formeln III oder IV steht
-CH₂-CH=CH₂ (III)
-CH=CR¹R² (IV)
worin
R¹ and R² für H, C₁-C₄-Alkyl oder Phenyl stehen, und
n für eine Zahl von 1 bis 6 steht,
mit Ozon umsetzt und
(a) für den Fall, dass B für einen Rest der Formel IV steht, worin R¹ und R² für Phenyl stehen, gegebenenfalls das erhaltene Reaktionsgemisch anschließend auf eine Temperatur von 60 bis 150 °C erwärmt; und
(b) in den übrigen Fällen das erhaltene Reaktionsgemisch anschließend auf eine Temperatur von 60 bis 150 °C erwärmt.

2. Verfahren nach Anspruch 1, worin R¹ und R² für Phenyl stehen.

3. Verfahren nach Anspruch 1, worin R¹ und R² für Methyl stehen.

4. Verfahren nach einem der vorhergehenden Ansprüche, wobei man das erhaltene Reaktionsprodukt auf eine Temperatur von 70 bis 120 °C erwärmt.

5. Verfahren nach einem der vorhergehenden Ansprüche, wobei man das mit einer ethylenisch ungesättigten Doppelbindung terminierte Polyisobuten mit Ozon bei einer Temperatur von -100 bis 40 °C umsetzt.

## Claims

1. A process for preparing carboxyl-terminated polyisobutenes, which comprises reacting a polyisobutene which is terminated by an ethylenically unsaturated double bond and has the formula I
A(̵M-B)ₙ (I)
where
A is a radical derived from a polymerization initiator,
M is a polymer chain comprising repeating units of the formula II
⁅CH₂-C(CH₃)₂⁆ (II),
B is a radical of the formula III or IV
-CH₂-CH=CH₂ (III)
-CH=CR¹R² (IV)
where
R¹ and R² are each H, C₁-C₄-alkyl or phenyl and
n is from 1 to 6,
with ozone and,
(a) when B is a radical of the formula IV in which R¹ and R² are each phenyl, subsequently heating the reaction mixture obtained to from 60 to 150°C if appropriate; and
(b) in the other cases, subsequently heating the reaction mixture obtained to from 60 to 150°C.

2. The process according to claim 1, wherein R¹ and R² are each phenyl.

3. The process according to claim 1, wherein R¹ and R² are each methyl.

4. The process according to any of the preceding claims, wherein the reaction product obtained is heated to from 70 to 120°C.

5. The process according to any of the preceding claims, wherein the polyisobutene terminated by an ethylenically unsaturated double bond is reacted with ozone at from -100 to 40°C.

## Revendications

1. Procédé pour la préparation de polyisobutènes terminés par carboxyle, dans lequel on transforme un polyisobutène terminé par une double liaison éthyléniquement insaturée de formule I
A**(̵M-B)ₙ** **(I)**
où
A représente un radical dérivé d'un initiateur de polymérisation,
M représente une chaîne polymère, qui contient des unités répétées de formule II
**⁅CH₂-C(CH₃)₂⁆** **(II)**
B représente un radical des formules III ou IV,
-CH₂-CH=CH₂ **(III)**
-CH=CR¹R² **(IV)**
où
R¹ et R² représentent H, C₁-C₄-alkyle ou phényle, et
n vaut un nombre de 1 à 6,
avec de l'ozone et
(a) pour le cas où B représenterait un radical de formule IV, où R¹ et R² représentent phényle, on chauffe le cas échéant le mélange réactionnel obtenu ensuite à une température de 60 jusqu'à 150°C ; et
(b) dans les autres cas, on chauffe le mélange réactionnel obtenu ensuite à une température de 60 à 150°C.

2. Procédé selon la revendication 1, dans lequel R¹ et R² représentent phényle.

3. Procédé selon la revendication 1, dans lequel R¹ et R² représentent méthyle.

4. Procédé selon l'une quelconque des revendications précédentes, où on chauffe le produit de réaction obtenu à une température de 70 à 120°C.

5. Procédé selon l'une quelconque des revendications précédentes, où on transforme le polyisobutène terminé par une double liaison éthyléniquement insaturée avec de l'ozone à une température de -100 à 40°C.
